# FASCICULE DE BREVET EUROPEEN

(11) **EP 4 366 984 B1**
(45) Date de publication et mention de la délivrance du brevet: **31.12.2025**
(21) Numéro de dépôt: 22733195.6
(22) Date de dépôt: 25.05.2022
(51) Int. Cl.: B60Q 1/04, B62D 25/16

(54) **PLATINE DE FIXATION D'UN PROJECTEUR DE VÉHICULE AVEC MOYENS D'INDEXATION**
BEFESTIGUNGSPLATTE MIT INDEXIERUNGSMITTEL FÜR EINEN FAHRZEUGSCHEINWERFER
ATTACHMENT PLATE WITH INDEXING MEANS FOR A VEHICLE HEADLAMP

(30) Priorité: 09.07.2021 FR 2107490
(43) Date de publication de la demande: 15.05.2024
(73) Titulaire: Stellantis Auto SAS, 78300 Poissy (FR)
(72) Inventeur: SIMON, Herve, 78990 ELANCOURT (FR); ROYER, Guillaume, 91680 BRUYERES LE CHATEL (FR)
(74) Mandataire: BCIP
(86) Numéro de dépôt international: PCT/FR2022/050996
(87) Numéro de publication internationale: WO 2023/281172

(56) Documents cités:
- WO-A1-2009/121159
- WO-A1-2020/070404
- CN-A- 110 103 811
- JP-A- 2001 158 285
- JP-A- 2005 297 708

## Description

La présente invention revendique la priorité de la demande française 2107490 déposée le 9 juillet 2021.

Le domaine technique concerne les platines de fixation d'un projecteur, les ensembles de fixation d'un projecteur et les véhicules comportant de tels ensembles.

Les exigences réglementaires en matière de signalisation des véhicules automobiles sont très nombreuses et rendent ainsi la structure et l'assemblage des blocs optiques de plus en plus complexes. Le montage des blocs optiques sur la structure de caisse du véhicule intervient en fin de ligne d'assemblage après celui du pare-chocs. Ainsi, les contraintes d'accessibilité associées à l'encombrement important du bloc optique, d'une part, et à l'environnement complexe autour de l'aile du véhicule, d'autre part, à proximité de laquelle les blocs optiques sont installés, rendent les étapes d'assemblage d'autant plus complexes. Aussi, il est souhaitable que les blocs optiques soient montés sur la ligne d'assemblage du véhicule de la manière la plus simple possible pour les opérateurs. En outre, le montage des blocs optiques doit se faire avec une mise en géométrie précise selon un référentiel isostatique qui nécessite des zones distinctes d'indexation et de fixation du bloc optique à la caisse du véhicule, se traduisant par un nombre relativement important d'éléments d'indexage et de fixation dont certains sont d'une structure relativement complexe. Lors du montage du bloc optique sur la caisse du véhicule, le positionnement et l'orientation du bloc optique nécessitent de la part de l'opérateur de montage des mouvements du bloc optique suivant plusieurs directions qui sont non seulement fastidieuses mais également susceptibles d'endommager certains éléments d'indexage et, par conséquent, de ne pas assurer une bonne mise en géométrie du bloc optique.

Une solution mise en œuvre pour le montage d'un bloc optique consiste à fixer un premier support sur l'aile du véhicule et un deuxième support sur la doublure d'aile, le bloc optique étant fixé ensuite grâce aux deux supports. Or l'utilisation de deux supports distincts se traduit par des problèmes de rigidité de fixation, susceptibles de se traduire par un dérèglement de la mise en géométrie et ou de vibrations lors du déplacement du véhicule.

Des platines de fixation connues sont divulguées dans les documents WO 2020/070404 A, WO 2009/121159 A et JP 2001158285 A.

La présente invention a pour objet de pallier les problèmes exposés précédemment. Dans ce contexte technique, un but de la présente invention est de fournir une solution permettant de rigidifier la fixation du bloc optique tout en diminuant le nombre de pièces nécessaires.

A cet effet, la présente invention se rapporte à une platine de fixation d'un projecteur sur un véhicule automobile, monobloc, comportant une première zone de fixation permettant de fixer le projecteur sur la platine, la platine comportant une seconde zone de fixation permettant de fixer la platine sur une aile du véhicule et une troisième zone de fixation permettant de fixer la platine sur une pièce environnante de l'aile, la première zone de fixation comportant des premiers moyens d'indexation pour permettre l'indexation du projecteur sur la platine, au moins une des seconde et troisième zones comportant des seconds moyens d'indexation pour permettre l'indexation de la platine sur l'aile ou sur la pièce environnante.

L'invention concerne également un ensemble de fixation d'un projecteur sur un véhicule comportant une platine selon l'invention et comportant en outre une aile et une pièce environnante de l'aile, l'ensemble comportant des troisièmes moyens d'indexation pour complémenter les seconds moyens d'indexation et permettre l'indexation de la platine sur l'aile ou la pièce environnante.

L'invention concerne enfin un véhicule comportant au moins un ensemble selon l'invention.

Ainsi, l'utilisation d'une platine selon l'invention, monobloc, permet d'assurer la fixation du projecteur sur la caisse du véhicule grâce aux premières, secondes et troisième zones de fixation. La platine étant monobloc elle permet d'éviter l'utilisation de deux supports distincts. Les premiers moyens d'indexation permettent un premier réglage de la géométrie du véhicule tandis que les seconds moyens d'indexation offrent un deuxième réglage de la géométrie du projecteur. Le dernier réglage de la géométrie du projecteur est effectué grâce aux troisièmes moyens d'indexation de l'ensemble selon l'invention. Ainsi, une platine monobloc permet d'assurer une fixation rigide du projecteur entre l'aile et une pièce environnante, par exemple une doublure d'aile, ainsi qu'un positionnement précis suivant un référentiel isostatique prédéfini.

Selon un mode de réalisation de la platine, les seconds moyens d'indexation sont disposés dans la troisième zone de fixation et permettent l'indexation de la platine sur la pièce environnante.

Selon l'invention, les premiers et seconds moyens d'indexation comportent chacun au moins un orifice allongé, chacun suivant un axe prédéterminé et distinct d'une zone de fixation à une autre.

Selon un mode de réalisation de l'ensemble, il comporte une platine dans laquelle les seconds moyens d'indexation sont disposés dans la troisième zone de fixation et permettent l'indexation de la platine sur la pièce environnante, les troisièmes moyens d'indexation étant disposés sur l'aile du véhicule.

Selon une possibilité, l'ensemble comporte en outre un projecteur de véhicule fixé sur la première zone de fixation.

L'invention sera mieux comprise à la lecture de la description détaillée qui va suivre, donnée uniquement à titre d'exemple non limitatif et faite en se référant au dessin annexé sur lequel :

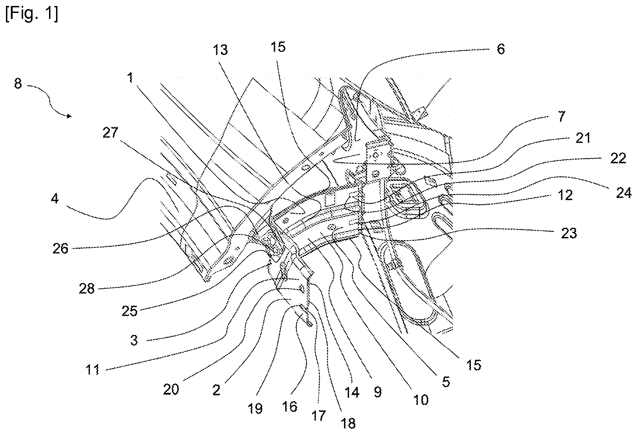

[Fig. 1] la figure 1, représente une vue en perspective et de face d'un ensemble selon l'invention.

Une platine 1 de fixation selon l'invention, illustrée sur la figure, monobloc, permet de fixer un projecteur sur un véhicule automobile, non illustrés. A cette fin, la platine 1 comporte une première zone 2 de fixation, illustrée sur la figure, permettant de fixer le projecteur sur la platine 1. La platine 1 comporte également une seconde zone 3 de fixation permettant de fixer la platine 1 sur une aile 4 du véhicule ainsi qu'une troisième zone 5 de fixation permettant de fixer la platine 1 sur une pièce 6 environnante de l'aile 4. En l'occurrence la pièce 6 est par exemple une doublure d'aile 7. Les seconde 3 et troisième 5 zones de fixation permettent donc la fixation de la platine 1 sur le châssis du véhicule pour former un ensemble 8 selon l'invention.

La platine 1 est obtenue, par exemple, par emboutissage d'une tôle 9. La platine 1 présente une première portion 10 et une deuxième portion 11 s'étendant respectivement suivant deux plans orthogonaux entre eux. Dans le mode de réalisation illustré sur la figure, la première portion 10 est légèrement incurvée et présente une longueur telle qu'elle permet de relier la doublure d'aile 6 à l'aile 4. La première portion 10 comporte la troisième zone 5 de fixation située à une première extrémité 12 de la première portion 10. La première portion 10 présente, par exemple, une nervure de renfort 13 conçue pour augmenter la résistance à la déformation de la première portion 10.

Dans le mode de réalisation illustré sur la figure, la deuxième portion 11, quant à elle, comporte les première et secondes zones 2, 3 de fixation. La deuxième portion 11 est destinée à s'étendre suivant un axe longitudinal du véhicule, lorsque la platine 1 est montée sur le véhicule. La deuxième portion 11 s'étend depuis la première portion 10 vers une deuxième extrémité 14. Cette deuxième extrémité 14 présente la première zone 2 de fixation. La seconde zone 3 de fixation est localisée entre la première portion 10 et la deuxième extrémité 14. Afin de rigidifier la platine 1, celle-ci comporte deux rebords 15 s'étendant le long des première et deuxième portions 10, 11.

La première zone 2 de fixation comporte des premiers moyens d'indexation 16 pour permettre l'indexation du projecteur sur la platine 1. Les premiers moyens d'indexation 16 présentent un premier orifice allongé 17 ménagé dans la tôle 9 et s'étendant depuis un premier bord 18 de cette dernière et délimitant la deuxième extrémité 14. Le premier orifice allongé 17 s'étend suivant un axe correspondant à un axe longitudinal du véhicule lorsque la platine 1 est montée sur le véhicule. Le premier orifice allongé 17 forme ainsi une première boutonnière 19. La première zone 2 de fixation présente également un premier trou de fixation 20 permettant la fixation du projecteur. Le projecteur est fixé sur la première zone 2 grâce à deux vis, non illustrées, coopérant, d'une part, avec le premier trou de fixation 20 et, d'autre part, avec le premier orifice allongé 17. L'indexation du projecteur suivant un axe correspondant à l'axe vertical du véhicule, lorsque la platine 1 est montée sur le véhicule, peut être ajusté en ajustant la position de la vis correspondante dans la première boutonnière 19.

Outre les premiers moyens d'indexation 16, la platine 1 est telle que au moins une des seconde et troisième zones 3, 5 comporte des seconds moyens d'indexation 21 pour permettre l'indexation de la platine 1 sur l'aile 4 ou sur la pièce environnante 6. Dans le mode de réalisation illustré sur la figure, les seconds moyens d'indexation 21 sont situés dans la troisième zone 5 de fixation, à proximité de la première extrémité 12. Les seconds moyens d'indexation 21 présentent, par exemple, deux seconds orifices allongés 22 s'étendant depuis un deuxième bord 23 délimitant la première extrémité 12. Les seconds orifices allongées 22 sont parallèles et s'étendent suivant un axe correspondant à un axe transversal du véhicule lorsque la platine 1 est montée sur le véhicule. Ces seconds orifices allongés 22 forment ainsi une deuxième boutonnière 24 permettant de fixer la platine 1 sur la doublure d'aile 7 tout en ajustant son positionnement et son indexation suivant un axe correspondant à un axe transversal du véhicule, lorsque la platine 1 est fixée sur le véhicule. Les seconds moyens d'indexation 21 permettent l'indexation de la platine 1 sur la pièce 6 environnante.

Ainsi, les premiers 16 et seconds 21 moyens d'indexation comportent chacun au moins un orifice allongé 17, 22 chacun suivant un axe prédéterminé et distinct d'une zone de fixation 2 à une autre 3.

L'ensemble 8 comporte des troisièmes moyens d'indexation 25 pour complémenter les seconds moyens d'indexation 21 et permettre l'indexation de la platine 1 sur l'aile 4 et la pièce 6 environnante. Les troisièmes moyens d'indexation 25 sont, par exemple, disposés sur une pâte de fixation 26 faisant saillie de l'aile 4 et comportent une troisième boutonnière 27 permettant l'ajustement d'une vis positionnée dans un deuxième trou de fixation 28 ménagé dans la deuxième portion 11. La troisième boutonnière 27 permet l'indexation de la platine 1 suivant l'axe longitudinal du véhicule.

Ainsi, l'indexation de la platine 1 sur le véhicule, en l'occurrence l'aile 4 et la pièce 6 environnante, est possible grâce aux deuxième et troisième boutonnières 24, 27. L'indexation du projecteur sur la platine 1 est quant à elle possible grâce à la première boutonnière 19. La mise en géométrie précise du projecteur est ainsi possible et facilitée tandis qu'une seule platine 1, monobloc est nécessaire pour son montage et son indexation.

L'invention ne se limite pas au mode de réalisation de la platine décrite ci-avant, seulement à titre d'exemple, mais d'autres modes de réalisation peuvent être conçus par l'homme de métier sans sortir du cadre et de la portée de la présente invention.

## Revendications

1. Platine (1) de fixation d'un projecteur sur un véhicule automobile, monobloc, comportant une première zone (2) de fixation permettant de fixer le projecteur sur la platine (1), la platine (1) comportant une seconde zone (3) de fixation permettant de fixer la platine (1) sur une aile (4) du véhicule et une troisième zone (5) de fixation permettant de fixer la platine (1) sur une pièce (6) environnante de l'aile (4), la première zone (2) de fixation comportant des premiers moyens d'indexation (16) pour permettre l'indexation du projecteur sur la platine (1), au moins une des seconde (3) et troisième (5) zones comportant des seconds moyens d'indexation (21) pour permettre l'indexation de la platine (1) sur l'aile (4) ou sur la pièce (6) environnante, **caractérisée en ce que** les premiers (16) et seconds (21) moyens d'indexation comportent chacun au moins un orifice allongé, chacun suivant un axe prédéterminé et distinct d'une zone de fixation à une autre.

2. Platine (1) selon la revendication 1, **caractérisée en ce que** les seconds moyens d'indexation (21) sont disposés dans la troisième zone (5) de fixation et permettent l'indexation de la platine (1) sur la pièce (6) environnante.

3. Ensemble (8) de fixation d'un projecteur sur un véhicule comportant une platine (1) selon l'une des revendications 1 ou 2 et comportant en outre une aile (4) et une pièce (6) environnante de l'aile (4), l'ensemble (8) comportant des troisièmes moyens d'indexation (24) pour complémenter les seconds moyens d'indexation (21) et permettre l'indexation de la platine (1) sur l'aile (4) ou la pièce (6) environnante.

4. Ensemble (8) selon la revendication 3, **caractérisé en ce qu'**il comporte une platine (1) selon la revendication 2 et **en ce que** les troisièmes moyens d'indexation (24) sont disposés sur l'aile (4) du véhicule.

5. Ensemble (8) selon la revendication 3 ou 4, **caractérisé en ce qu'**il comporte en outre un projecteur de véhicule fixé sur la première zone (2) de fixation.

6. Véhicule comportant au moins un ensemble (8) selon l'une des revendications 3 à 5.

## Patentansprüche

1. Platine (1) zur Befestigung eines Scheinwerfers an einem einteiligen Kraftfahrzeug mit einem ersten Befestigungsbereich (2) zur Befestigung des Scheinwerfers an der Platine (1), wobei die Platine (1) einen zweiten Befestigungsbereich (3) zur Befestigung der Platine (1) an einem Kotflügel (4) des Fahrzeugs und einen dritten Befestigungsbereich (5) zur Befestigung der Platine (1) an einem umgebenden Teil (6) des Kotflügels (4) aufweist, wobei der erste Befestigungsbereich (2) erste Indexierungsmittel (16) zur Indexierung des Scheinwerfers an diesem aufweist Platine (1), wobei mindestens einer der zweiten (3) und dritten (5) Bereiche zweite Indexierungsmittel (21) aufweist, um die Indexierung der Platine (1) am Flügel (4) oder am umgebenden Teil (6) zu ermöglichen, **dadurch gekennzeichnet, dass** die ersten (16) und zweiten (21) Indexierungsmittel jeweils mindestens eine längliche Öffnung aufweisen, die jeweils entlang einer vorbestimmten Achse verlaufen und sich von einer Befestigungszone zu einer anderen unterscheiden.

2. Platine (1) nach Anspruch 1, **dadurch gekennzeichnet, dass** die zweiten Indexierungsmittel (21) in der dritten Befestigungszone (5) angeordnet sind und die Indexierung der Platine (1) an dem umgebenden Teil (6) ermöglichen.

3. Anordnung (8) zur Befestigung eines Scheinwerfers an einem Fahrzeug mit einer Platine (1) nach einem der Ansprüche 1 oder 2, die ferner einen Flügel (4) und ein umgebendes Teil (6) des Flügels (4) aufweist, wobei die Anordnung (8) dritte Indexierungsmittel (24) aufweist, um die zweiten Indexierungsmittel (21) zu ergänzen und die Indexierung der Platine (1) an dem umgebenden Flügel (4) oder Teil (6) zu ermöglichen.

4. Anordnung (8) nach Anspruch 3, **dadurch gekennzeichnet, dass** sie eine Platte (1) nach Anspruch 2 aufweist und dass die dritten Indexierungsmittel (24) auf dem Kotflügel (4) des Fahrzeugs angeordnet sind.

5. Anordnung (8) nach Anspruch 3 oder 4, **dadurch gekennzeichnet, dass** sie ferner einen Fahrzeugscheinwerfer aufweist, der an der ersten Befestigungszone (2) befestigt ist.

6. Fahrzeug mit mindestens einer Baugruppe (8) nach einem der Ansprüche 3 bis 5

## Claims

1. A mounting plate (1) for mounting a headlight on a motor vehicle, in one piece, comprising a first mounting zone (2) for mounting the headlight on the mounting plate (1), the mounting plate (1) comprising a second mounting zone (3) for mounting the mounting plate (1) on a wing (4) of the vehicle and a third mounting zone (5) for mounting the mounting plate (1) on a component (6) surrounding the wing (4), the first mounting zone (2) comprising first indexing means (16) for mounting the headlight on the mounting plate (1), at least one of the second (3) and third (5) zones comprising second indexing means (21) to allow indexing of the plate (1) on the wing (4) or on the surrounding component (6), wherein the first (16) and second (21) indexing means each comprise at least one elongate orifice, each along a predetermined axis and distinct from one fixing zone to another.

2. Plate (1) according to claim 1, wherein the second indexing means (21) are arranged in the third fixing zone (5) and allow indexing of the plate (1) on the surrounding component (6).

3. Assembly (8) for fixing a headlight to a vehicle comprising a mounting plate (1) according to either of Claims 1 and 2 and further comprising a wing (4) and a component (6) surrounding the wing (4), the assembly (8) comprising third indexing means (24) for complementing the second indexing means (21) and allowing the mounting plate (1) to be indexed to the wing (4) or the surrounding component (6).

4. Assembly (8) according to Claim 3, **characterised in that** it comprises a plate (1) according to Claim 2 and **in that** the third indexing means (24) are arranged on the wing (4) of the vehicle.

5. Assembly (8) according to Claim 3 or 4, **characterised in that** it further comprises a vehicle headlight fixed to the first fixing zone (2).

6. Vehicle comprising at least one assembly (8) according to one of claims 3 to 5.
